(19) Europäisches Patentamt
European Patent Office
Office européen des brevets

(11) Publication number: **0 274 200 B1**

(12) **EUROPEAN PATENT SPECIFICATION**

(45) Date of publication of patent specification: **02.02.94**

(51) Int. Cl.5: **C08K 5/00**, C08L 23/02, //(C08K5/00,5:18,5:52)

(21) Application number: **87310151.3**

(22) Date of filing: **18.11.87**

(54) **Polyolefins stabilized against oxidative degradation with mixtures of aralkyl-substituted diarylamines and sterically hindered phosphites.**

(30) Priority: **11.12.86 US 941657**

(43) Date of publication of application: **13.07.88 Bulletin 88/28**

(45) Publication of the grant of the patent: **02.02.94 Bulletin 94/05**

(84) Designated Contracting States: **AT BE CH DE ES FR GB GR IT LI LU NL SE**

(56) References cited:
**US-A- 4 290 941**

**PATENT ABSTRACTS OF JAPAN, vol. 8, no. 212 (C-244)[1649], 27 September 1984&NUM;**

(73) Proprietor: **UNIROYAL CHEMICAL COMPANY, Inc.**
**World Headquarters**
**Middlebury Connecticut 06749(US)**

(72) Inventor: **Chucta, Thomas Max**
**151 Andrew Avenue,**
**Apt. 148**
**Naugatuck, CT 06770(US)**

(74) Representative: **Browne, Robin Forsythe, Dr. et al**
**Urquhart-Dykes & Lord**
**Tower House**
**Merrion Way**
**Leeds LS2 8PA West Yorkshire (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to polyolefin homopolymers, copolymers and their blends stabilized against oxidative degradation with a combination of at least one aralkyl-diarylamine and at least one sterically hindered phosphite.

Aralkyl-substituted diarylamines such as 4,4′-bis(alpha,alpha-dimethylbenzyl)diphenylamine (NAUGARD 445, Uniroyal Chemical) and their use as antioxidants for a variety of polymeric materials are known from U.S. Patent Nos. 3,452,956 and 3,505,225.

Sterically hindered phosphites constitute another known class of antioxidant materials. Antioxidant compositions containing both an amine component and a sterically hindered phosphite component, with and without other ingredients, are also known.

Thus, U.S. Patent No. 3,377,315 describes stabilizers for natural and synthetic polymers such as the polyolefins based on acylaminodiphenylamines in optional combination with phosphite esters such as tris-nonylphenyl phosphite, phenyl dioctyl phosphite and trilauryl trithiophosphite.

U.S. Patent No. 3,655,559 discloses stabilizers for synthetic lubricants based on alkylated diphenylamines and, optionally, any one of numerous other kinds of antioxidants, alkyl, aryl or alkaryl phosphites amongst them.

U.S. Patent No. 3,886,114 discloses the combination of a phosphite and either a phenol or an amine as an antioxidant for natural rubber.

U.S. Patent Nos. 4,195,016; 4,233,208; 4,290,941; and 4,351,759 each disclose the use of sterically hindered phosphites to stabilize organic material, including polyolefins such as polypropylene, against thermal, oxidative and ultraviolet light degradation. The phosphites may optionally be combined with any one of several other kinds of antioxidants such as aminoaryl derivatives, octylated and nonylated diphenylamine being specifically mentioned in this regard.

### SUMMARY OF THE INVENTION

In accordance with the present invention, polyolefin homopolymers, copolymers and blends thereof are stabilized against oxidative degradation by the incorporation therein of a stabilizing amount of an antioxidant composition which comprises:

a) at least one aralkyl-substituted diarylamine; and,

b) at least one sterically hindered phosphite.

On a weight-for-weight basis, the foregoing combination of aralkyl-substituted diarylamine(s) and hindered phosphite(s) has been found to impart a significantly greater degree of protection to polyolefins against oxidative degradation than either of these materials employed separately.

### DESCRIPTION OF THE PREFERRED EMBODIMENTS

The aralkyl-substituted diarylamines which are useful in the practice of this invention can be represented by the general formula

$$\underset{\displaystyle H}{Ar-N-Ar'}$$

wherein Ar and Ar' each is an aryl radical, at least one of said radicals being substituted with an aralkyl radical.

Preferred aralkyl-substituted diarylamines are those disclosed in U.S. Patent Nos. 3,452,056 and 3,505,225. The preferred aralkyl-substituted diarylamines can be represented by the following general formulas:

(I)

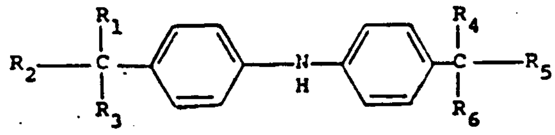

where

| | |
|---|---|
| $R_1$ | is a phenyl or p-tolyl radical; |
| $R_2$ and $R_3$ | are selected from methyl, phenyl and p-tolyl radicals; |
| $R_4$ | is selected from methyl, phenyl, p-tolyl and neopentyl radicals; |
| $R_5$ | is selected from methyl, phenyl, p-tolyl and 2-phenylisobutyl radicals; and, |
| $R_6$ | is a methyl radical. |

(II)

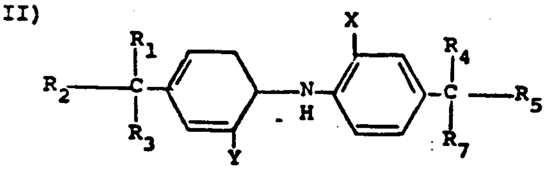

where

| | |
|---|---|
| $R_1$ through $R_5$ | are selected from the radicals shown in Formula I and $R_7$ is selected from methyl, phenyl or p-tolyl radicals; |
| X | is selected from the group consisting of the radicals methyl, ethyl, a sec-alkyl containing from three to ten carbon atoms, alpha,alpha-dimethylbenzyl, alpha-methylbenzyl, chlorine, bromine, carboxyl, and metal salts of the carboxylic acids where the metal is zinc, cadmium, nickel, lead, tin, magnesium, or copper; and, |
| Y | is selected from the group consisting of the radicals hydrogen, methyl, ethyl, a sec-alkyl containing from three to ten carbon atoms, chlorine and bromine. |

(III)

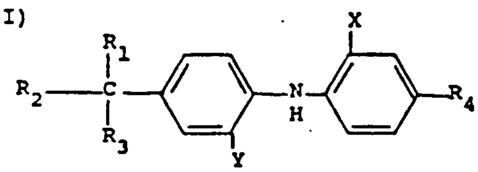

where

| | |
|---|---|
| $R_1$ | is a phenyl or p-tolyl radical; |
| $R_2$ and $R_3$ | are selected from methyl, phenyl and p-tolyl radicals; |
| $R_4$ | is selected from the group consisting of the radicals hydrogen, a primary, secondary and tertiary alkyl containing from one to ten carbon atoms and alkoxyl containing from one to ten carbon atoms which may be straight chain or branched; and, |
| X and Y | are selected from the group consisting of the radicals hydrogen, methyl, ethyl, sec-alkyl containing from three to ten carbon atoms, chlorine and bromine. |

(IV)

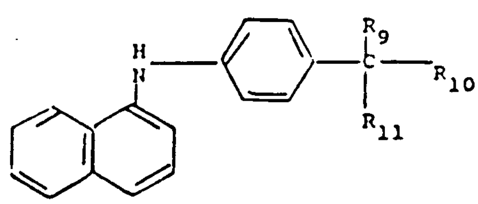

where

$R_9$ is a phenyl or p-tolyl radical;

$R_{10}$ is selected from methyl, phenyl p-tolyl and 2-phenyl isobutyl radicals; and,

$R_{11}$ is selected from methyl, phenyl and p-tolyl radicals.

(V)

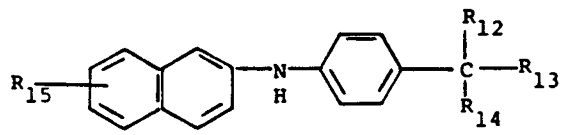

where

$R_{12}$ is a phenyl or p-tolyl radical;

$R_{13}$ is selected from methyl, phenyl and p-tolyl radicals;

$R_{14}$ is selected from methyl, phenyl, p-tolyl and 2-phenylisobutyl radicals; and,

$R_{15}$ is selected from the group consisting of the radicals hydrogen alpha,alpha-dimethylbenzyl, alpha-methylbenzyl, triphenylmethyl and alpha,alpha,p-trimethylbenzyl.

Typical chemicals useful in the invention are as follows:

TYPE I

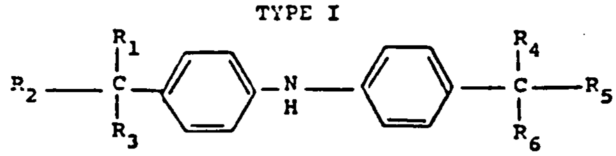

| $R_1$ | $R_2$ | $R_3$ | $R_4$ | $R_5$ | $R_6$ |
|---|---|---|---|---|---|
| Phenyl | Methyl | Methyl | Phenyl | Methyl | Methyl |
| Phenyl | Phenyl | Methyl | Phenyl | Phenyl | Methyl |
| Phenyl | Phenyl | Phenyl | Neopentyl | Methyl | Methyl |
| p-Tolyl | Methyl | Methyl | p-Tolyl | Methyl | Methyl |

TYPE II

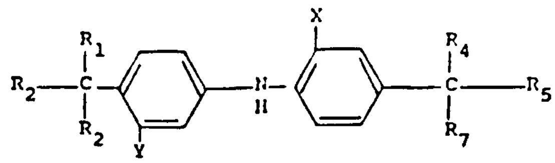

| $R_1$ | $R_2$ | $R_3$ | $R_4$ | $R_5$ | $R_7$ | X | Y |
|---|---|---|---|---|---|---|---|
| Phenyl | Methyl | Methyl | Phenyl | Methyl | Methyl | Alpha,alpha-dimethyl-benzyl | Hydrogen |
| Phenyl | Methyl | Methyl | Phenyl | Methyl | Methyl | Bromo | Bromo |
| Phenyl | Methyl | Methyl | Phenyl | Methyl | Methyl | Carboxyl | Hydrogen |
| Phenyl | Methyl | Methyl | Phenyl | Methyl | Methyl | Nickel carboxylate | Hydrogen |
| Phenyl | Methyl | Methyl | Phenyl | Methyl | Methyl | 2-Butyl. | Hydrogen |
| Phenyl | Methyl | Methyl | Phenyl | Methyl | Methyl | 2-Octyl | Hydrogen |
| Phenyl | Phenyl | Phenyl | Phenyl | Phenyl | Phenyl | 2-Hexyl | Hydrogen |

TYPE III

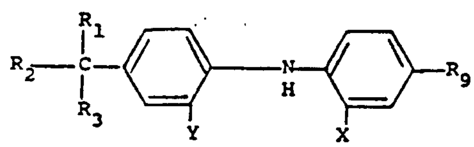

| $R_1$ | $R_2$ | R3 | $R_9$ | X | Y |
|---|---|---|---|---|---|
| Phenyl | Methyl | Methyl | Isopropoxy | Hydrogen | Hydrogen |
| Phenyl | Methyl | Methyl | Hydrogen | 2-Octyl | Hydrogen |
| Phenyl | Phenyl | Phenyl | Hydrogen | 2-Hexyl | Hydrogen |

TYPE IV

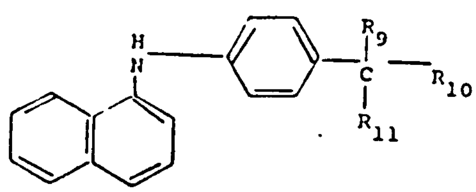

$R_9$ is phenyl and $R_{10}$ and $R_{11}$ are methyl.

TYPE V

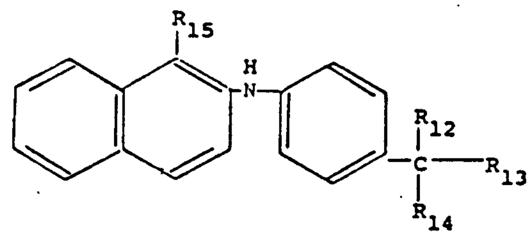

| $R_{12}$ | $R_{13}$ | $R_{14}$ | $R_{15}$ |
|---|---|---|---|
| Phenyl | Methyl | Methyl | Hydrogen |
| Phenyl | Methyl | Methyl | Alpha,alpha-dimethylbenzyl |

Of the foregoing preferred aralkyl-substituted diarylamines, the substituted diphenylamines of the formula

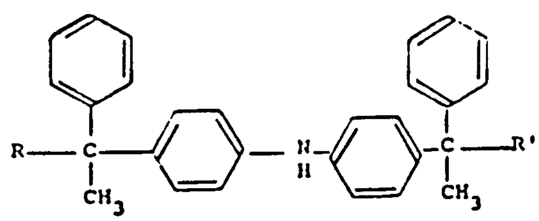

where R and R′ are methyl or phenyl are especially preferred. The compound wherein R and R′ are methyl is 4,4′-bis-(alpha,alpha-dimethylbenzyl)diphenylamine and the compound in which R and R′ are phenyl is 4,4′-bis-(alpha-methylbenzhydryl)diphenylamine.

Sterically hindered phosphites which can be used in combination with the foregoing aralkyl-substituted diarylamines include essentially any of the sterically hindered phosphites heretofore employed as antioxidants/stabilizers. Representative of such compounds are those disclosed in U.S. Patent Nos. 4,195,016; 4,233,208; 4,290,941; and 4,351,759. Specifically, sterically hindered phosphites which can be used herein with generally good results include phosphites of the general formula:

$P(O-R_1)_3$ (I)

wherein $R_1$ is an alkyl, aryl or aralkyl radical, or

$(R_2-O)_pP(R_3)_q$ (II)

wherein $R_2$ and $R_3$ independently are alkyl, aryl or aralkyl, p is 1 or 2 and q is 1 or 2, the sum of p and q being 3. More specifically, sterically hindered phosphites which can be used herein with generally outstanding results include arylphosphites of the general formula

$$[Ar-O]_m-P-[R]_n$$

wherein Ar is an aryl radical possessing substitution on at least two nuclear carbon atoms, m is 1 to 3, n is 0, 1 or 2, the sum of m and n being 3 and R is an art-recognized substituent satisfying the trivalent state of P. The preferred arylphosphites are the phenyl phosphites of the general formula

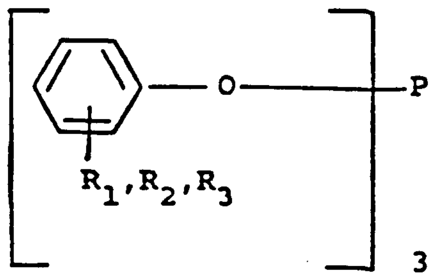

wherein $R_1$, $R_2$ and $R_3$ are each hydrogen or alkyl. Among the preferred tris-alkylphenyl phosphites which can be used herein with generally good results are tris(2,4-di-tert-butylphenyl)phosphite (NAUGARD 524, Uniroyal Chemical), tris (mixed mono and dinonyl phenyl)phosphite (POLYGARD, Uniroyal Chemical, and tris(monononyl phenyl)phosphite (NAUGARD P, Uniroyal Chemical). Other preferred phosphites include bis-(2,4-di-t-butyl phenyl) pentaerythritol diphosphite (ULTRANOX 626, Borg Warner) and distearylpentaerythritol diphosphite (WESTON 618, Borg Warner). In addition, tetrakis [2,4-di-tert-butyl phenyl (4,4′-biphenylene-diphosphonite)] (P-EPQ, Sandoz) can also be used in synergistic combination with the foregoing aralkyl-substituted diarylamines with excellent results.

The polyolefins which are stabilized against oxidative degradation employing mixtures of the foregoing aralkyl-substituted diarylamines and sterically hindered phosphites include homopolymers derived from mono- and di-ethylenically unsaturated hydrocarbon monomers such as polyethylene, which can optionally be crosslinked, polypropylene, polyisobutylene, polymethylbutene-1,polymethylpentene-1,polybutene-1,poly-isoprene, polybutadiene, polystyrene, polyisobutylene, and the like; copolymers derived from two or more of such monomers such as ethylene-propylene copolymers, propylene-butene-1 copolymers, propylene-isobutylene copolymers, styrene-butadiene copolymers and terpolymers of ethylene and propylene with a diene, such as, for example, hexadiene, dicyclopentadiene or ethylidenenorbornene; and, blends of the foregoing homopolymers and/or copolymers such as those of polypropylene and polyethylene, polypropylene and polybutene-1 and polypropylene and polyisobutylene. The polyolefin homopolymers, copolymers and blends thereof can be combined with minor amounts by weight, i.e., less than about 50 weight percent and preferably less than about 20 weight percent, of one or more compatible or compatibilized polymers other than those mentioned, e.g., polyvinylhalides, chlorinated polyolefins, polyesters, polyamides and polyacrylates.

The combined amounts of aralkyl-substituted diarylamine(s) and sterically hindered phosphite(s) incorporated into the foregoing polyolefins will, at a minimum, be that required to impart a significant level of stability against oxidative degradation. In general, such amounts can vary from about 0.01 to about 5.0, and preferably from about 0.5 to about 1, weight percent of polyolefin homopolymer, copolymer or polyolefin blend. Although combined amounts of the antioxidants in excess of about 5 weight percent can be employed, such amounts might have a deleterious effect on the physical and mechanical properties of the polyolefin substrate in which case they should ordinary be avoided.

The relative proportions of aralkyl-substituted diarylamine(s) to sterically hindered phosphite(s) can vary widely. In general, the ratios of aralkyl-substituted diarylamine(s) to sterically hindered phosphite(s) can vary from about 20:1 to about 1:20 and preferably from about 10:1 to about 1:10 although ratios somewhat above and below the broader of these ranges can also be used with advantageous results.

The procedure employed to incorporate the aralkyl-substituted diarylamine(s) and the sterically hindered phosphite(s) into the polyolefin is not critical and can, in fact, be any of those procedures disclosed in the prior U.S. patents incorporated by reference herein. For example, these materials can be introduced into the polyolefin as a premix or they can be maintained separately and added to the polyolefin simultaneously or sequentially and then homogenously distributed throughout the polymer by milling, extrusion blending or some other mechanical working procedure. Either the aralkyl-substituted diarylamine component(s), the sterically hindered phosphite component(s) or both can be added to the polyolefin by way of a preconcentrate or in a carrier system, e.g., in a suitable solvent or co-solvent.

Following common practice, other additives can be introduced into the polyolefin prior to, during and/or following addition of the antioxidants. Such additives include other stabilizers, colorants, reinforcements, fillers, antistatic agents, lubricants, plasticizers, and the like, present in the customary amounts.

With regard to optional antioxidants which can be used herein together with the alkaryl-substituted diarylamine antioxidant(s) and sterically hindered phosphite antioxidant(s) to achieve an enhanced level of

protection of polyolefins against oxidative degradation, the sterically hindered phenols are preferred. Representative of such compounds are those disclosed in U.S. Patent Nos. 3,304,283; 3,432,578; 3,886,114; 3,979,180; 4,002,230; 4,290,941; 4,341,677; 4,420,579; 4,440,671; and 4,497,931. More specifically, sterically hindered phenols which can be used herein with generally good results include
2,4-dimethyl-6-octyl phenol; 2,6-di-tert-butyl-4-methyl phenol (i.e., butylated hydroxy toluene);
2,6-ditertiarybutyl-4-ethyl phenol;
2,6-ditertiarybutyl-4-n-butyl phenol;
2,2′-methylenebis(4-methyl-6-tertiarybutyl phenol);
2,2′-methylenebis(4-ethyl-6-tertiarybutyl-phenol);
2,4-dimethyl-6-tertiarybutyl phenol; 4-hydroxymethyl-2,6-ditertiarybutyl phenol; n-octadecyl-beta (3,5-ditertiarybutyl-4-hydroxyphenyl)propionate;
2,6-dioctadecyl-4-methyl phenol; 2,4,6-trimethyl phenol;
2,4,6-triisopropyl phenol; 2,4,6-tri-tert-butyl phenol;
2-tert-butyl-4,6-dimethyl phenol; 2,6-methyl-4-didodecyl phenol; octadecyl-3,5-di-tert-butyl-4-hydroxy hydrocinnamate (NAUGARD 76, Uniroyal Chemical; IRGANOX 1076,
Ciba-Geigy); tetrakis[methylene (3,5-di-tert-butyl-4-hydroxyhydrocinnamate)]methane (NAUGARD 10, Uniroyal Chemical;
IRGANOX 1010, Ciba-Geigy); 2,2′-oxamido bis-[ethyl-3-(3,5-di-tert-butyl-4- hydroxyphenyl)propionate (NAUGARD XL-1, Uniroyal Chemical); 1,3,5-tris(4-tert-butyl-3-hydroxy-2,6-dimethylbenzyl)-s-triazine-2,4,6-(1H,3H,5H)trione (CYANOX 1790, American Cyanamid Co.): 1,3,5-trimethyl-2,4,6-tris(3,5-di-tert-butyl-4-hydroxybenzyl)benzene (ETHANOX 330, Ethyl Corp.); and, tris(3,5-di-tert-butyl-4-hydroxybenzyl) isocyanurate (GOODRITE 3114, B.F. Goodrich); 4,4′-thiobis(6-t-butyl-m-cresol), tris(2-methyl-4-hydroxy-5-t-butylphenyl)butane, 3,5-di-t-butyl4hydroxyhydrocinnamic acid triester with 1,3,5-tris(2-hydroxyethyl)-5-triazine-2,4,6(1H,3H,5H)trione, bis(3,3-bis(4-hydroxy-3-t-butylphenyl)butanoic acid)glycolester.

In general, these phenol antioxidants, where present, can be used to replace an equivalent weight amount of a portion of the aralyklyl-substituted diarylamine antioxidant(s), e.g., up to about 50 weight percent of the latter.

EXAMPLES 1-12

The following amounts (wt. %) of antioxidants were incorporated into polypropylene homopolymer (PRO-FAX 6501, Hercules, Inc.) containing 0.1% by weight of calcium stearate as an acid scavenger:

| Example | Aralkyl-substituted Diarylamine; NAUGARD 445[1] | Sterically Hindered Phosphite; NAUGARD 524[2] | Sterically Hindered Phenol (Optional) |
|---|---|---|---|
| 1 | - | 0.1 | - |
| 2 | 0.1 | 0.1 | - |
| 3 | - | 0.1 | NAUGARD 76[3], 0.1 |
| 4 | 0.05 | 0.1 | NAUGARD 76, 0.05 |
| 5 | - | 0.1 | NAUGARD 10[4], 0.1 |
| 6 | 0.05 | 0.1 | NAUGARD 10, 0.05 |
| 7 | - | 0.1 | NAUGARD XL-1[5], 0.1 |
| 8 | 0.05 | 0.1 | NAUGARD XL-1, 0.05 |
| 9 | - | 0.1 | ETHYL 330[6], 0.1 |
| 10 | 0.05 | 0.1 | ETHYL 330, 0.05 |
| 11 | - | 0.1 | GOODRITE 3114[7], 0.1 |
| 12 | 0.05 | 0.1 | GOODRITE 3114, 0.05 |

[1] 4,4'-Bis(alpha,alpha-dimethylbenzyl)diphenylamine
[2] Tris(2,4-di-tert-butylphenyl)phosphite
[3] Octadecyl-3,5-di-tert-butyl-4-hydroxy hydrocinnamate
[4] Tetrakis[methylene(3,5-di-tert-butyl-4-hydroxy-hydrocinnamate)]methane
[5] Oxamido bis-[ethyl-3-(3,5-di-tert-butyl-4-hydroxyphenyl) propionate
[6] 1,3,5-Trimethyl-2,4,6-tris(3,5-di-tert-butyl-4-hydroxybenzyl)benzene
[7] Tris(3,5-di-t-butyl-4-hydroxybenzyl)isocyanurate

The foregoing antioxidants/antioxidant compositions were incorporated into the resin in an extruder operating under two sets of conditions: the first extrudate was obtained at 193 °C and 25 RPM and the second through fifth extrudates were obtained at 250 °C and 50 RPM.

The effect of the foregoing antioxidants/antioxidant compositions on the melt stability of the polypropylene samples (measured as the melt flow rate at 230 °C. and 2.16 kg in accordance with ASTM D1238, Condition L) and on the color stability (measured as Hunter b Color carried out upon 65 mil plaques) are set forth below as follows:

| | Melt Flow Rate [units]: Extrudate | | | Hunter b Color: Extrudate | | |
|---|---|---|---|---|---|---|
| Example | 1st | 3rd | 5th | 1st | 3rd | 5th |
| 1 | 1.6 | 8.4 | 54.3 | 2.1 | 2.6 | 3.2 |
| 2 | 1.1 | 1.5 | 2.3 | 1.7 | 3.3 | 4.3 |
| 3 | 1.2 | 1.9 | 3.0 | 2.2 | 3.6 | 4.6 |
| 4 | 1.1 | 1.4 | 2.4 | 1.9 | 3.6 | 4.8 |
| 5 | 1.2 | 1.5 | 2.7 | 2.2 | 3.2 | 4.6 |
| 6 | 1.2 | 1.4 | 2.0 | 1.6 | 3.3 | 4.6 |
| 7 | 1.1 | 2.7 | 4.8 | 2.3 | 3.4 | 6.4 |
| 8 | 1.0 | 1.4 | 1.9 | 1.8 | 5.2 | 10.5 |
| 9 | 1.1 | 1.6 | 2.5 | 1.9 | 3.2 | 4.3 |
| 10 | 0.9 | 1.4 | 2.2 | 1.8 | 3.3 | 4.8 |
| 11 | 1.3 | 2.0 | 2.7 | 2.0 | 3.3 | 4.6 |
| 12 | 1.1 | 1.5 | 2.6 | 1.9 | 4.1 | 6.0 |

As these data show (Example 2), the combination of aralkyl-substituted diarylamine (NAUGARD 445) and sterically hindered phosphite (NAUGARD 524) resulted in a dramatic improvement in stabilization as indicated by the lower melt flow rate compared to the base polypropylene (Example 1) which contained only the phosphite. In each of the remaining examples (Examples 3 to 12), modest but significant reductions in melt flow rate were obtained with combinations of aralkyl-substituted diarylamine, sterically hindered phosphite and optional sterically hindered phenol (Examples 4, 6, 8, 10 and 12) over the use of combinations of sterically hindered phosphite and sterically hindered phenol (Examples 3, 5, 7, 9 and 11). Serendipitously, a substitution by the amine andioxidants of this invention for a portion of the relatively more costly hindered phenolic antioxidant compounds provides comparable or improved melt stability to the polymer system.

As for color stability, these data show that the combination of the amines of this invention with the phosphites of this invention gives better or comparable color stability than the hindered phenolic antioxidant/phosphite antioxidant combinations or the amine/hindered phenolic/phosphite antioxidant combinations. In most instances, the three-component antioxidant blends of this invention give comparable or better color stability than the hindered phenolic/phosphite antioxidant combinations with the exceptions of Example 7 and 8 and Example 11 and 12.

## Claims

**1.** A polyolefin stabilized against oxidative degradation by the presence therein of a stabilizing amount of an antioxidant composition characterised in that the composition comprises:
a) at least one aralkyl-substituted diarylamine; and,
b) at least one sterically hindered phosphite.

**2.** A polyolefin according to claim 1 characterised in that the aralkyl-substituted diarylamine possesses the general formula

$$Ar{-}\underset{H}{N}{-}Ar'$$

wherein Ar and Ar′ each is an aryl radical, at least one of said radicals being substituted with an aralkyl radical.

**3.** A polyolefin according to claim 2 characterised in that the aralkyl-substituted diarylamine is selected from

(I)

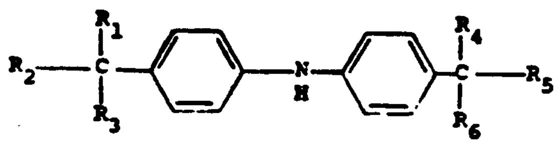

where

| | |
|---|---|
| $R_1$ | is a phenyl or p-tolyl radical; |
| $R_2$ and $R_3$ | are selected from methyl, phenyl and p-tolyl radicals; |
| $R_4$ | is selected from methyl, phenyl, p-tolyl and neopentyl radicals; |
| $R_5$ | is selected from methyl, phenyl, p-tolyl and 2-phenylisobutyl radicals; and, |
| $R_6$ | is a methyl radical; |

(II)

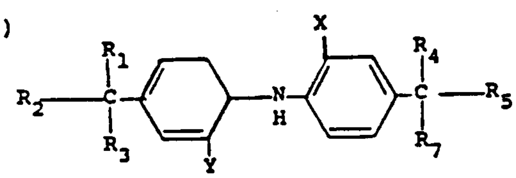

where

| | |
|---|---|
| $R_1$ through $R_5$ | are selected from the radicals shown in Formula I and $R_7$ is selected from methyl, phenyl or p-tolyl radicals; |
| X | is selected from the radicals methyl, ethyl, a sec-alkyl containing from three to ten carbon atoms, alpha,alpha-dimethylbenzyl, alpha-methylbenzyl, chlorine, bromine, carboxyl, and metal salts of the carboxylic acids where the metal is zinc, cadmium, nickel, lead, tin, magnesium, or copper; and, |
| Y | is selected from the radicals hydrogen, methyl, ethyl, a sec-alkyl containing from three to ten carbon atoms, chlorine and bromine; |

(III)

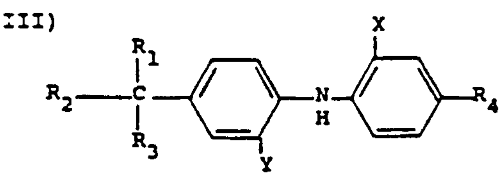

where

| | |
|---|---|
| $R_1$ | is a phenyl or p-tolyl radical; |
| $R_2$ and $R_3$ | are selected from methyl, phenyl and p-tolyl radicals; |
| $R_4$ | is selected from the radicals hydrogen, a primary, secondary and tertiary alkyl containing from one to ten carbon atoms and alkoxyl containing from one to ten carbon atoms which may be straight chain or branched; and, |
| X and Y | are selected from the radicals hydrogen, methyl, ethyl, sec-alkyl containing from three |

to ten carbon atoms, chlorine and bromine;

(IV)

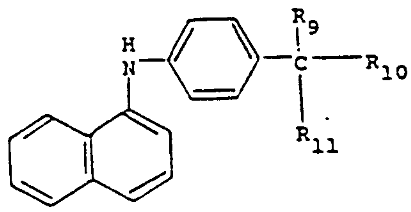

where

$R_9$ is a phenyl or p-tolyl radical;

$R_{10}$ is selected from methyl, phenyl p-tolyl and 2-phenyl isobutyl radicals; and,

$R_{11}$ is selected from methyl, phenyl and p-tolyl radicals, and,

(V)

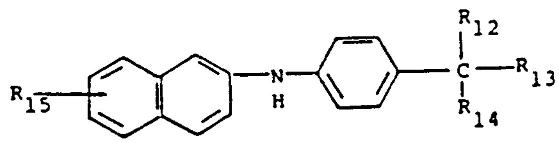

where

$R_{12}$ is a phenyl or p-tolyl radical;

$R_{13}$ is selected from methyl, phenyl and p-tolyl radicals;

$R_{14}$ is selected from methyl, phenyl, p-tolyl and 2-phenylisobutyl radicals; and,

$R_{15}$ is selected from the radicals hydrogen alpha,alpha-dimethylbenzyl, alpha-methylbenzyl triphenylmethyl and alpha,alpha,p-trimethylbenzyl.

**4.** A polyolefin according to claim 3 characterised in that the aralkyl-substituted diarylamine is 4,4′-bis-(alpha,alpha-dimethylbenzyl)diphenylamine or 4,4′-bis-(alpha-methylbenzyl)diphenylamine.

**5.** A polyolefin according to any of the preceding claims characterised in that the sterically hindered phosphite is selected from phosphites of the general formula

$P(O\text{-}R_1)_3$ (I)

wherein $R_1$ is an alkyl, aryl or aralkyl radical and phosphites of the general formula

$(R_2\text{-}O)_pP(R_3)_q$ (II)

wherein $R_2$ and $R_3$ independently are alkyl, aryl or aralkyl, p is 1 or 2 and q is 1 or 2, the sum of p and q being 3.

**6.** A polyolefin according to any of claims 1 to 4 characterised in that the sterically hindered phosphite is an arylphosphite of the general formula

$$[Ar\text{-}O]_m P [R]_n$$

werein Ar is an aryl radical possessing substitution on at least two nuclear carbon atoms, m is 1 to 3, n is 0, 1 or 2, the sum of m and n being 3 and R is an art-recognized substituent satisfying the trivalent state of P.

**7.** A polyolefin according to claim 6 characterised in that the arylphosphite is a phenyl phosphite of the general formula

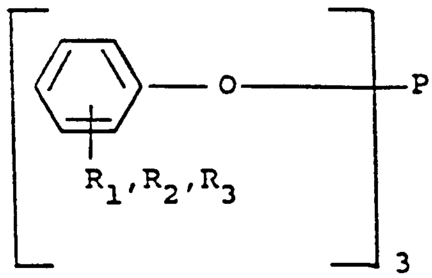

wherein $R_1$, $R_2$ and $R_3$ are each hydrogen or alkyl.

**8.** A polyolefin according to claim 7 characterised in that the phenyl phosphite is tris(2,4-di-tert-butyl; phenyl)phosphite.

**9.** A polyolefin according to any of the preceding claims characterised in that it further contains a sterically hindered phenol.

**10.** A polyolefin according to claim 9 characterised in that the sterically hindered phenol is selected from 2,4-dimethyl-6-octyl phenol;
2,6-di-tert-butyl-4-methyl phenol; 2,6-ditertiarybutyl-4-ethyl phenol; 2,6-ditertiarybutyl-4-n-butyl phenol;
2,2′-methylenebis(4-methyl-6-tertiarybutyl phenol);
2,2′-methylenebis(4-ethyl-6-tertiarybutyl-phenol);
2,4-dimethyl-6-tertiarybutyl phenol; 4-hydroxymethyl-2,6-ditertiarybutyl phenol; n-octadecyl-beta (3,5-ditertiarybutyl-4-hydroxyphenyl)propionate;
2,6-dioctadecyl-4-methyl phenol; 2,4,6-trimethyl phenol;
2,4,6-triisopropyl phenol; 2,4,6-tri-tert-butyl phenol;
2-tert-butyl-4,6-dimethyl phenol; 2,6-methyl-4-didodecyl phenol; octadecyl-3,5-di-tert-butyl-4-hydroxy hydrocinnamate; tetrakis[methylene (3,5-di-tert-butyl-4-hydroxy-hydrocinnamate)]methane; 2,2′-oxamido bis-[ethyl-3-(3,5-di-tert-butyl-4-hydroxyphenyl)propionate;
1,3,5-tris(4-tert-butyl-3-hydroxy-2,6-dimethylbenzyl)-s-triazine-2,4,6-(1H,3H,5H)trione; 1,3,5-trimethyl-2,4,6-tris(3,5-di-tert- butyl-4-hydroxybenzyl)benzene; and tris (3, 5-di-t-butyl-4-hydroxybenzyl)-isocyanurate ; 4,4′-thiobis(6-t-butyl-m-cresol), tris(2-methyl-4-hydroxy-5-t-butylphenyl)butane, 3,5-di-t-butyl4hydroxyhydrocinnamic acid triester with 1,3,5-tris(2-hydroxyethyl)-5-triazine-2,4,6(1H,3H,5H)-trione, bis(3,3-bis(4-hydroxy-3-t-butylphenyl)butanoic acid)glycolester.

**11.** A polyolefin according to any of the preceding claims characterised in that the polymer is a polyolefin homopolymer, polyolefin copolymer or polyolefin blend.

**12.** A polyolefin according to claim 11 characterised in that the polymer is polypropylene homopolymer.

**13.** A polyolefin according to any of the preceding claims characterised in that the phosphite is tris(2,4-di-tert-butylphenyl)phosphite; tris(mixed mono-and dinonyl phenyl)phosphite, tris(mononony phenyl)-phosphite; bis(2,4-di-tert-butyl phenyl) pentaerylthritol diphosphite; or, distearyl-pentaerylthritol diphosphite.

**Patentansprüche**

**1.** Polyolefin, das durch das Vorhandensein einer stabilisierenden Menge einer Antioxidationsmittelmischung in dem Polyolefin gegen oxidativen Abbau stabilisiert ist, dadurch gekennzeichnet, daß die Mischung
a) mindestens ein Aralkyl-substituiertes Diarylamin und
b) mindestens ein sterisch gehindertes Phosphit enthält.

**2.** Polyolefin nach Anspruch 1, dadurch gekennzeichnet, daß das Aralkyl-substituierte Diarylamin die allgemeine Formel

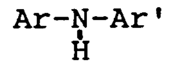

besitzt, worin Ar und Ar' jeweils einen Arylrest bedeuten, wobei mindestens einer der erwähnten Reste mit einem Aralkylrest substituiert ist.

3. Polyolefin nach Anspruch 2, dadurch gekennzeichnet, daß das Aralkyl-substituierte Diarylamin aus

(I) 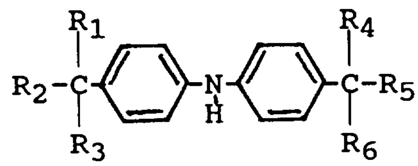

worin

| | |
|---|---|
| $R_1$ | ein Phenyl- oder p-Tolylrest ist; |
| $R_2$ und $R_3$ | aus dem Methyl-, Phenyl- und p-Tolylrest ausgewählt sind; |
| $R_4$ | aus dem Methyl-, Phenyl-, p-Tolyl- und Neopentylrest ausgewählt ist; |
| $R_5$ | aus dem Methyl-, Phenyl-, p-Tolyl- und 2-Phenylisobutylrest ausgewählt ist und |
| $R_6$ | ein Methylrest ist; |

(II) 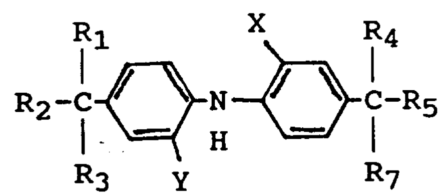

worin

| | |
|---|---|
| $R_1$ bis $R_5$ | aus den in Formel I gezeigten Resten ausgewählt sind und |
| $R_7$ | aus dem Methyl-, Phenyl- oder p-Tolylrest ausgewählt ist; |
| X | aus den Resten Methyl, Ethyl, *sek.*-Alkyl, das drei bis zehn Kohlenstoffatome enthält, alpha,alpha-Dimethylbenzyl, alpha-Methylbenzyl, Chlor, Brom, Carboxyl und Metallsalze der Carbonsäuren, wo das Metall Zink, Cadmium, Nickel, Blei, Zinn, Magnesium oder Kupfer ist, ausgewählt ist; und |
| Y | aus den Resten Wasserstoff, Methyl, Ethyl, *sek.*-Alkyl, das drei bis zehn Kohlenstoffatome enthält, Chlor und Brom ausgewählt ist; |

(III) 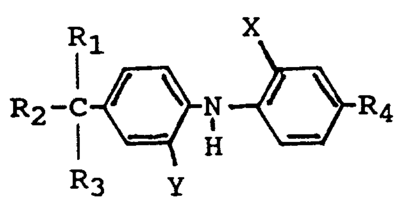

worin

| | |
|---|---|
| $R_1$ | ein Phenyl- oder p-Tolylrest ist; |
| $R_2$ und $R_3$ | aus dem Methyl-, Phenyl- und p-Tolylrest ausgewählt sind; |
| $R_4$ | aus den Resten Wasserstoff, primäres, sekundäres und tertiäres Alkyl, das ein bis zehn Kohlenstoffatome enthält, und Alkoxyl, das ein bis zehn Kohlenstoffatome enthält und geradkettig oder verzweigt sein kann, ausgewählt ist; und |
| X und Y | aus den Resten Wasserstoff, Methyl, Ethyl, *sek.*-Alkyl, das drei bis zehn Kohlenstoffatome enthält, Chlor und Brom ausgewählt sind; |

(IV)

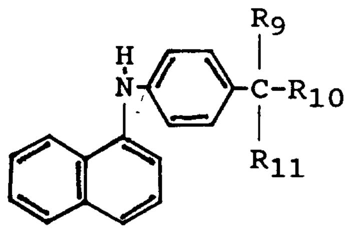

worin
- $R_9$ ein Phenyl- oder p-Tolylrest ist;
- $R_{10}$ aus dem Methyl-, Phenyl-, p-Tolyl- und 2-Phenylisobutylrest ausgewählt ist und
- $R_{11}$ aus dem Methyl-, Phenyl- und p-Tolylrest ausgewählt ist, und

(V)

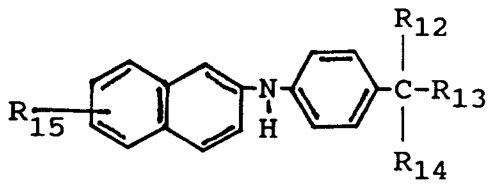

worin
- $R_{12}$ ein Phenyl- oder p-Tolylrest ist;
- $R_{13}$ aus dem Methyl-, Phenyl- und p-Tolylrest ausgewählt ist;
- $R_{14}$ aus dem Methyl-, Phenyl-, p-Tolyl- und 2-Phenylisobutylrest ausgewählt ist und
- $R_{15}$ aus den Resten Wasserstoff, alpha,alpha-Dimethylbenzyl, alpha-Methylbenzyl, Triphenylmethyl und alpha,alpha-p-Trimethylbenzyl ausgewählt ist,

ausgewählt ist.

**4.** Polyolefin nach Anspruch 3, dadurch gekennzeichnet, daß das Aralkyl-substituierte Diarylamin 4,4'-Bis-(alpha,alpha-dimethylbenzyl)diphenylamin oder 4,4'-Bis(alpha-methylbenzyl)diphenylamin ist.

**5.** Polyolefin nach einem der Vorhergehenden Ansprüche, dadurch gekennzeichnet, daß das sterisch gehinderte Phosphit aus Phosphiten der allgemeinen Formel

$P(O\text{-}R_1)_3$ (I)

worin $R_1$ ein Alkyl-, Aryl- oder Aralkylrest ist, und Phosphiten der allgemeinen Formel

$$(R_2\text{-}O)_p P(R_3)_q \qquad \text{(II)}$$

worin $R_2$ und $R_3$ unabhängig voneinander Alkyl-, Aryl- oder Aralkyl bedeuten, p 1 oder 2 ist und q 1 oder 2 ist, wobei die Summe von p und q 3 beträgt, ausgewählt ist.

**6.** Polyolefin nach einem der Ansprüche 1 bis 4, dadurch gekennzeichnet, daß das sterisch gehinderte Phosphit ein Arylphosphit der allgemeinen Formel

$$[Ar\text{-}O]_m\text{-}P\text{-}[R]_n$$

ist, worin Ar ein Arylrest ist, der an mindestens zwei Kohlenstoffatomen des Kerns Substitution zeigt, m 1 bis 3 ist, n 0, 1 oder 2 ist, wobei die Summe von m und n 3 ist, und R ein auf dem Fachgebiet anerkannter Substituent ist, der den dreiwertigen Zustand von P erfüllt.

**7.** Polyolefin nach Anspruch 6, dadurch gekennzeichnet, daß das Arylphosphit ein Phenylphosphit der allgemeinen Formel

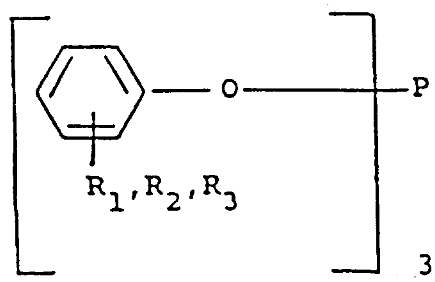

ist, worin $R_1$, $R_2$ und $R_3$ jeweils Wasserstoff oder Alkyl bedeuten.

**8.** Polyolefin nach Anspruch 7, dadurch gekennzeichnet, daß das Phenylphosphit Tris(2,4-di-*tert*.-butylphenyl)phosphit ist.

**9.** Polyolefin nach einem der vorhergehenden Ansprüche, dadurch gekennzeichnet, daß es ferner ein sterisch gehindertes Phenol enthält.

**10.** Polyolefin nach Anspruch 9, dadurch gekennzeichnet, daß das sterisch gehinderte Phenol aus 2,4-Dimethyl-6-octylphenol, 2,6-Di-*tert*.-butyl-4-methylphenol, 2,6-Di-*tert*.-butyl-4-ethylphenol, 2,6-Di-*tert*.-butyl-4-*n*-butyl-phenol, 2,2'-Methylenbis(4-methyl-6-*tert*.-butylphenol), 2,2'-Methylenbis(4-ethyl-6-*tert*.-butylphenol), 2,4-Dimethyl-6-*tert*.-butylphenol, 4-Hydroxymethyl-2,6-di-*tert*.-butylphenol, *n*-Octadecyl-beta-(3,5-di-*tert*.-butyl-4-hydroxyphenyl)-propionat, 2,6-Dioctadecyl-4-methylphenol, 2,4,6-Trimethylphenol, 2,4,6-Triisopropylphenol, 2,4,6-Tri-*tert*.-butylphenol, 2-*tert*.-Butyl-4,6-dimethylphenol, 2,6-Methyl-4-didodecylphenol, Octadecyl-3,5-di-*tert*.-butyl-4-hydroxyhydrocinnamat, Tetrakis[methylen-(3,5-di-*tert*.-butyl-4-hydroxyhydrocinnamat)]methan, 2,2'-Oxamidobis[ethyl-3-(3,5-di-*tert*.-butyl-4-hydroxyphenyl)-propionat], 1,3,5-Tris(4-*tert*.-butyl-3-hydroxy-2,6-dimethylbenzyl)-s-triazin-2,4,6-(1*H*,3*H*,5*H*)-trion, 1,3,5-Trimethyl-2,4,6-tris(3,5-di-*tert*.-butyl-4-hydroxybenzyl)benzol und Tris(3,5-di-*t*-butyl-4-hydroxybenzyl)-isocyanurat, 4,4,-Thiobis(6-*t*-butyl-m-cresol), Tris(2-methyl-4-hydroxy-5-*t*-butylphenyl)butan, 3,5-Di-*t*-butyl-4-hydroryhydrozimtsäuretriester mit 1,3,5-Tris(2-hydroxyethyl)-5-triazin-2,4,6-(1*H*,3*H*,5*H*)-trion und Bis[3,3-bis(4-hydroxy-3-*t*-butylphenyl)-butansäure]glykolester ausgewählt ist.

**11.** Polyolefin nach einem der vorhergehenden Ansprüche, dadurch gekennzeichnet, daß das Polymer ein Polyolefin-Homopolymer, ein Polyolefin-Copolymer oder eine Polyolefinmischung ist.

**12.** Polyolefin nach Anspruch 11, dadurch gekennzeichnet, daß das Polymer Polypropylen-Homopolymer ist.

**13.** Polyolefin nach einem der vorhergehenden Ansprüche, dadurch gekennzeichnet, daß das Phosphit Tris(2,4-di-*tert*.-butylphenyl)phosphit, Tris[mono- und dinonylphenyl (gemischt)]phosphit, Tris-(monononylphenyl)phosphit, Bis(2,4-di-*t*-butylphenyl)pentaerythritdiphosphit oder Distearylpentaerythritdiphosphit ist.

## Revendications

**1.** Polyoléfine stabilisée contre une dégradation oxydative par la présence d'une quantité stabilisante d'une composition antioxydante, caractérisée en ce que la composition comprend :

a) au moins une diarylamine aralkyle-substituée; et

b) au moins un phosphite stériquement empêché.

**2.** Polyoléfine selon la revendication 1, caractérisée en ce que la diarylamine aralkyle-substituée possède la formule générale

Ar-N-Ar'
H

où chacun de Ar et Ar' est un radical aryle, au moins l'un desdits radicaux étant substitué par un radical aralkyle.

**3.** Polyoléfine selon la revendication 2, caractérisée ence que la diarylamine aralkyle-substituée est choisi parmi

(I)

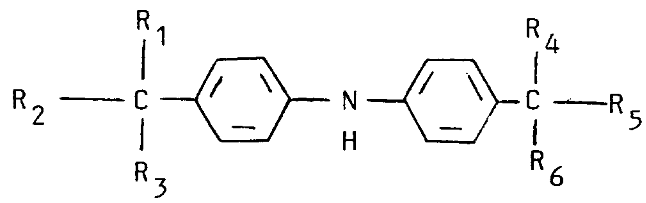

où

| | |
|---|---|
| $R_1$ | est un radical phényle ou p-tolyle ; |
| $R_2$ et $R_3$ | sont choisis parmi des radicaux méthyle, phényle et p-tolyle ; |
| $R_4$ | est choisi parmi des radicaux méthyle, phényle, p-tolyle et néopentyle ; |
| $R_5$ | est choisi parmi des radicaux méthyle, phényle, p-tolyle et 2-phénylisobutyle ; et |
| $R_6$ | est un radical méthyle ; |

(II)

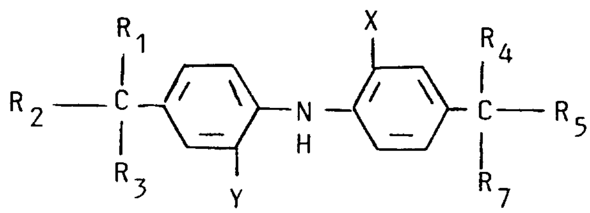

où

| | |
|---|---|
| $R_1$ à $R_5$ | sont choisis parmi les radicaux montrés à la Formule I et $R_7$ est choisi parmi des radicaux méthyle, phényle ou p-tolyle ; |
| X | est choisi parmi les radicaux méthyle, éthyle, un alkyle secondaire contenant de trois à dix atomes de carbone, alpha,alpha-diméthylbenzyle, alpha-méthylbenzyle, chlore, brome, carboxyle et sels métalliques des acides carboxyliques où le métal est zinc, cadmium, nickel, plomb, étain, magnésium ou cuivre ; et |
| Y | est choisi parmi les radicaux hydrogène, méthyle, éthyle, un alkyle secondaire contenant trois à dix atomes de carbone chlore et brome ; |

(III)

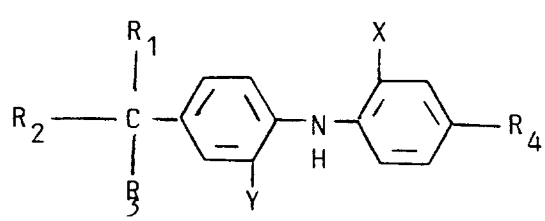

où

- $R_1$ est un radical phényle ou p-tolyle ;
- $R_2$ et $R_3$ sont choisis par les radicaux méthyle, phényle et p-tolyle ;
- $R_4$ est choisi parmi les radicaux hydrogène, un alkyle primaire, secondaire et tertiaire contenant de un à dix atomes de carbone et un alcoxy contenant de un à dix atomes de carbone qui peut être à chaîne droite ou ramifiée ;
- X et Y sont choisis parmi les radicaux hydrogène, méthyle, éthyle, alkyle secondaire contenant trois à dix atomes de carbone chlore et brome ;

(IV)

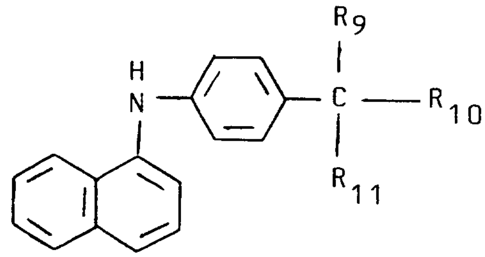

où

- $R_9$ est un radical phényle ou p-tolyle ;
- $R_{10}$ est choisi parmi les radicaux méthyle, phényle , p-tolyle et 2-phénylisobutyle ; et
- $R_{11}$ est choisi parmi les radicaux méthyle, phényle et p-tolyle , et

(V)

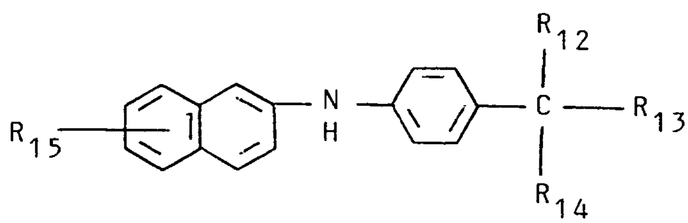

où

- $R_{12}$ est un radical phényle ou p-tolyle ;
- $R_{13}$ est choisi parmi les radicaux méthyle, phényle et p-tolyle ;
- $R_{14}$ est choisi parmi les radicaux méthyle, phényle, p-tolyle et 2-phénylisobutyle ; et
- $R_{15}$ est choisi parmi les radicaux hydrogène, alpha,alpha-diméthylbenzyle, alpha-méthylbenzyl triphénylméthyle et alpha,alpha-p-triméthylbenzyle.

**4.** Polyoléfine selon la revendication 3, caractérisée en ce que la diarylamine aralkyle-substituée est la 4,4'-bis-(alpha,alpha-diméthylbenzyl)diphénylamine ou la 4,4'-bis-(alpha,méthylbenzyl)diphénylamine.

**5.** Polyoléfine selon l'une quelconque des revendications précédentes caractérisée en ce que le phosphite à empêchement stérique est choisi parmi des phosphites de la formule générale

$P(O-R_1)3$ (I)

où $R_1$ est un radical alkyle, aryle ou aralkyle et des phosphites de la formule générale

$(R_2-O)_pP(R_3)_q$ (II)

où $R_2$ et $R_3$ sont indépendamment alkyle, aryle ou aralkyle, p est 1 ou 2 et q est 1 ou 2, la somme de p et q étant 3.

6. Polyoléfine selon l'une quelconque des revendications 1 à 4, caractérisée en ce que le phosphite à empêchement stérique est un aryl phosphite de la formule générale

$$[Ar-O]_m-P-[R]_n$$

où Ar est un radical aryle possédant une substitution sur au moins deux atomes de carbone du noyau, m est 1 à 3, n est 0, 1 ou 2, la somme de m et n étant 3 et R est un substituant reconnu satisfaisant à l'état trivalent de P.

7. Polyoléfine selon la revendication 6, caractérisée en ce que l'aryl phosphite est un phényl phosphite de la formule générale

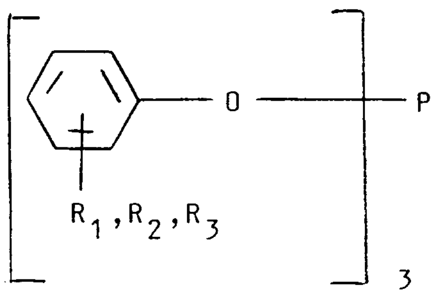

où $R_1$, $R_2$ et $R_3$ sont hydrogène ou alkyle.

8. Polyoléfine selon la revendication 7, caractérisée en ce que le phényl phosphite est tris(2,4-di-tert-butylphényl)phosphite.

9. Polyoléfine selon l'une quelconque des revendications précédentes caractérisé en ce qu'elle contient de plus un phénol à empêchement stérique.

10. Polyoléfine selon la revendication 9, caractérisée en ce que le phénol à empêchement stérique est choisi parmi 2,4-diméthyl-6-octyl phénol ; 2,6 dibutyl-tertiaire-4-méthyl phénol ; 2,6-dibutyl tertiaire-4-éthyl phénol ; 2,6-dibutyl tertiaire-4-n-butyl phénol ; 2,2'-méthylènebis(4-méthyl-6-butyl tertiaire phénol); 2,2'-méthylènebis(4-éthyl-6-butyl tertiaire-phénol) ; 2,4-diméthyl-6-butyl tertiaire phénol ; 4-hydroxyméthyl-2,6-dibutyl tertiaire phénol ; n-octadécyl-bêta-(3,5-dibutyl tertiaire 4-hydroxyphényl)propionate ; 2,6-dioctadécyl-4-méthyl phénol ; 2,4,6-triméthyl phénol ; 2,4,6-triisopropyl phénol ; 2,4,6-tri-butyl tertiaire phénol ; 2-butyl tertiaire-4,6-diméthyl phénol ; 2,6-méthyl-4-didodécyl phénol ; octadécyl-3,5-dibutyl tertiaire-4-hydroxy-hydrocinnamate ; tétrakis[méthylène (3,5-dibutyl-tertiaire-4-hydroxy-hydrocinnamate)]méthane ; 2,2'-oxamido-bis-[éthyl-3-(3,5-dibutyl tertiaire-4-hydroxyphényl)propionate ; 1,3,5-tris(4-butyl-tertiaire-3-hydroxy-2,6-diméthylbenzyl)-s-triazine-2,4,6-(1H,3H,5H)-trione ; 1,3,5-triméthyl-2,4,6-tris-(3,5-dibutyl tertiaire-4-hydroxybenzyl)benzène et tris(3,5-di-t-butyl-4-hydroxybenzyl)isocyanurate ; 4,4'-thiobis(6-t-butyl-m-crésol), tris(2-méthyl-4-hydroxy-5-t-butylphényl)butane, triester de l'acide 3,5-di-t-butyl-4-hydroxyhydrocinnamique avec la 1,3,5-tris(2-hydroxyéthyl)-5-triazine-2,4,6(1H,3H, 5H)-trione, le glycolester de l'acide bis(3,3-bis(4-hydroxy-3-t-butylphényl)butanoïque.

11. Polyoléfine selon l'une quelconque des revendications précédentes, caractérisée en ce que le polymère est un homopolymère de polyoléfine, un copolymère de polyoléfine ou un mélange de polyoléfines.

12. Polyoléfine selon la revendication 11, caractérisée en ce que le polymère est un homopolymère de polypropylène.

13. Polyoléfine selon l'une quelconque des revendications précédentes, caractérisée ence que le phosphite est tris(2,4-dibutyl tertiaire phényl)phosphite, tris(mono- et dinonyl phényl mélangés)phosphite, tris-(mononony phényl)phosphite ; bis(2,4-dibutyl tertiaire phényl)pentaérythritol diphosphite ; ou distéaryl-pentaérythritol diphosphite.